# FASCICULE DE BREVET EUROPEEN

(11) **EP 3 285 683 B1**
(45) Date de publication et mention de la délivrance du brevet: **30.01.2019**
(21) Numéro de dépôt: 16721198.6
(22) Date de dépôt: 19.04.2016
(51) Int. Cl.: A61D 19/02, G01K 11/12

(54) **PAILLETTE POUR LA CONSERVATION D'UNE DOSE PRÉDÉTERMINÉE DE SUBSTANCE À BASE LIQUIDE**
STROHHALM ZUR KONSERVIERUNG EINER FESTGELEGTEN DOSIS EINER SUBSTANZ AUF FLÜSSIGKEITSBASIS
STRAW FOR PRESERVING A PRESET DOSE OF A LIQUID-BASED SUBSTANCE

(30) Priorité: 20.04.2015 FR 1553536
(43) Date de publication de la demande: 28.02.2018
(73) Titulaire: IMV Technologies, 61300 Saint-Ouen-Sur-Iton (FR)
(72) Inventeur: SCHMITT, Eric, 53700 Villaines-La-Juhel (FR); GORGES, Jean-Charles, 72610 Chenay (FR)
(74) Mandataire: Santarelli
(86) Numéro de dépôt international: PCT/FR2016/050905
(87) Numéro de publication internationale: WO 2016/170263

(56) Documents cités:
- FR-A1- 3 011 732
- US-A- 4 134 359
- US-A1- 2011 121 094

## Description

L'invention a trait d'une manière générale à la conservation d'une dose prédéterminée de substance à base liquide, notamment de la semence animale pure ou diluée ; et plus particulièrement aux paillettes pour effectuer une telle conservation.

On sait qu'une telle paillette comporte un tube et un bouchon disposé dans le tube. Le bouchon est habituellement du type tripartite décrit à l'origine dans le brevet français 995.878, correspondant au brevet britannique 669,265, c'est-à-dire formé par deux tampons en substance fibreuse enserrant une poudre se transformant au contact d'un liquide en une pâte ou gel imperméable adhérant à la paroi du tube pour que le bouchon soit étanche aux liquides.

Des bouchons semblables mais perfectionnés sont décrits par les demandes de brevet français 2 824 255 et 2 824 256.

On connait également des bouchons d'un autre type, par exemple un bouchon fait d'un cylindre monobloc de matière microporeuse hydrophobe décrit par la demande de brevet européen 0 873 726 ou un bouchon fait d'un cylindre monobloc de matière microporeuse auto-scellante fritté décrit par la demande PCT WO 2010/070533. Le document FR3 011 732 divulgue une paillette pour la conservation d'une dose prédéterminée de substance à base liquide selon le préambule de la revendication 1.

A l'état initial, le bouchon est disposé au voisinage de l'une des extrémités du tube et il est prévu qu'à l'état rempli, la dose de substance liquide qui doit être conservée dans la paillette soit disposée entre le bouchon et l'autre extrémité du tube (extrémité la plus éloignée du bouchon).

Pour remplir la paillette, l'extrémité la plus proche du bouchon est mise en communication avec une source de vide tandis que l'extrémité la plus éloignée du tube est mise en communication avec un récipient contenant la substance à introduire dans la paillette.

L'air initialement contenu entre le bouchon et l'extrémité la plus éloignée du tube est aspiré au travers du bouchon tandis que la substance progresse dans le tube jusqu'à ce qu'elle rencontre le bouchon.

Le cas échéant, après remplissage, la paillette est soudée au voisinage de l'une ou de ses deux extrémités et est stockée au froid.

Pour vider la paillette, le cas échéant après découpage des portions d'extrémité soudées et décongélation, on fait pénétrer dans le tube par l'extrémité la plus proche du bouchon une tige qui vient porter contre le bouchon. Avec cette tige, on fait coulisser le bouchon à la façon d'un piston vers l'extrémité la plus éloignée du bouchon, ce qui provoque l'expulsion de la dose de substance qui avait été introduite dans la paillette.

Lorsque la paillette est utilisée pour conserver de la semence animale diluée, en particulier de la semence bovine, le vidage de la paillette est mis en oeuvre pour opérer une insémination artificielle.

L'invention vise à fournir une telle paillette qui offre aux opérateurs de nouvelles capacités tout en restant simple, commode et économique à fabriquer et à utiliser.

L'invention propose à cet effet une paillette pour la conservation d'une dose prédéterminée de substance à base liquide, comportant un tube s'étendant entre une première extrémité et une seconde extrémité et comportant un bouchon perméable aux gaz et étanche aux liquides, lequel bouchon est disposé dans le tube au voisinage de sa première extrémité et s'étend entre une première extrémité tournée vers la première extrémité du tube et une seconde extrémité tournée vers la seconde extrémité du tube, avec ledit bouchon et ledit tube qui sont configurés pour qu'après que la substance à base liquide est venue à la rencontre du bouchon par sa seconde extrémité, le bouchon bloque le passage de la substance à base liquide et est, par poussage sur sa première extrémité, coulissable dans le tube vers la seconde extrémité du tube, caractérisée en ce que ledit tube est en matière thermochromique présentant un virage de teinte réversible à un seuil prédéterminé de température, grâce à quoi le tube présente un premier aspect visuel si sa température est en-dessous dudit seuil prédéterminé et un deuxième aspect visuel différent du premier aspect visuel si sa température est au-dessus dudit seuil prédéterminé.

La matière du tube de la paillette joue ainsi le rôle d'un composant indicateur de température.

Un tel composant permet à l'opérateur, quand la paillette est remplie, de vérifier visuellement si la dose de substance contenue dans la paillette est à une température cible, par exemple au-dessus de 35°C ou de 37°C lorsqu'il s'agit d'effectuer une insémination artificielle.

L'invention est basée sur l'observation qu'en principe, vu la faible épaisseur de paroi du tube d'une paillette, la température de la partie du tube qui entoure la substance correspond à celle de la substance et a donc le premier aspect visuel quand la température de la substance est en-dessous du seuil prédéterminé et le deuxième aspect visuel quand la température de la substance est au-dessus du seuil prédéterminé.

Le fait que le composant indicateur de température soit formé par le tube permet de vérifier la température sur toute la longueur du tube. En particulier, si une partie de la dose de substance que contient le tube sur une partie de sa longueur est en-dessous du seuil prédéterminé et une autre partie de la dose de substance que contient le tube sur une autre partie de sa longueur est au-dessus de ce seuil, la différence d'aspect du tube sur les deux parties concernées permettra à l'opérateur de savoir que cette différence existe.

Le caractère réversible du virage de teinte de la matière thermochromique avec laquelle est formé le tube permet un suivi de la température de la substance contenue dans la paillette. Par exemple, si la substance a eu le temps de se refroidir entre l'opération de réchauffement et le moment où l'opérateur s'apprête à effectuer une insémination artificielle, au point d'être en-dessous du seuil prédéterminé, l'aspect du tube de la paillette permettra à l'opérateur de savoir que la substance s'est ainsi refroidie.

On notera qu'il est avantageux que le rôle de composant indicateur de température soit joué par la matière du tube plutôt que par un composant rapporté sur la matière du tube tel qu'un revêtement ou une étiquette.

Cela permet de refléter fidèlement la température de la substance grâce au contact direct entre la matière thermochromique et la substance tout en évitant les risques que pourraient poser un tel contact direct en raison des frottements entre le bouchon et le tube qui se produisent lors de fabrication (insertion du bouchon dans le tube) ou lors de l'expulsion de la dose de substance (coulissement du bouchon sur une grande partie de la longueur du tube).

Cela permet également de pouvoir fabriquer la paillette de façon beaucoup plus simple et économique que s'il avait fallu ajouter sur la surface interne du tube, sur toute sa longueur, un composant indicateur de température séparé.

La fabrication du tube de la paillette peut par exemple s'effectuer classiquement par extrusion d'une matière plastique conventionnelle si ce n'est qu'il lui a été ajouté un additif pour la rendre thermochromique avec le virage de teinte susmentionné.

Selon des caractéristiques avantageuses, ledit tube est transparent ou translucide lorsqu'il présente le premier aspect et lorsqu'il présente le deuxième aspect, le bouchon étant visible au travers du tube.

Le caractère visible du bouchon au travers du tube de la paillette, aussi bien en-dessous qu'au-dessus du seuil prédéterminé, permet de pouvoir s'assurer de l'intégrité de la paillette, en particulier lors de la fabrication (on peut vérifier que le bouchon a correctement été inséré dans le tube), lors du remplissage (on peut vérifier que la dose de substance a bien atteint le bouchon) et après une insémination artificielle (on peut vérifier que le bouchon a bien atteint la seconde extrémité du tube et que la substance a donc été expulsée correctement).

Selon d'autres caractéristiques avantageuses, le tube présente une surface interne ayant un état de surface lisse.

L'état de surface lisse (c'est-à-dire sans granulométrie) du tube de la paillette du côté interne permet d'offrir une bonne conservation de la substance à base liquide, en particulier une excellente viabilité des spermatozoïdes lorsque la substance est de la semence animale diluée, ainsi que l'étanchéité entre le tube et le bouchon lors de son coulissement pour expulser la dose de substance.

Selon d'autres caractéristiques avantageuses :
- ledit seuil prédéterminé est de 35°C à 37°C dans le sens de l'augmentation de température ;
- ledit seuil prédéterminé est de 32°C à 34°C dans le sens de la diminution de température ;
- le tube a une teinte bleue dans le premier aspect et est incolore dans le deuxième aspect ;
- la matière du tube comporte des microcapsules ayant une écorce renfermant une solution thermochrome ;
- ladite écorce des microcapsules est en polyurée ou en polyuréthane ;
- ladite écorce des microcapsules est issue de la réaction d'un polyisocyanate aromatique ;
- ladite solution thermochrome comporte comme solvant du méthyl stéarate ;
- dans lesdites microcapsules la proportion en masse de l'écorce est comprise entre 20% et 40%, de préférence 25% ;
- la proportion en masse des microcapsules dans la matière du tube est comprise entre 1,5% et 10%, de préférence 2,5% ;
- la matière du tube comporte une base en PVC ; et/ou
- ledit bouchon est formé par deux tampons en substance fibreuse enserrant un agent de scellement formé par une poudre se transformant au contact de ladite substance en une pâte ou gel imperméable adhérant à la paroi du tube pour que le bouchon soit étanche aux liquides, ladite poudre comportant de la poudre d'un sel non fluorophore à l'état sec et fluorophore quand il est dissout dans l'eau.

L'exposé de l'invention sera maintenant poursuivi par la description d'exemples de réalisation, donnée ci-après à titre illustratif et non limitatif, en référence aux dessins annexés, sur lesquels :
- la figure 1 est une vue schématique d'une paillette selon l'invention, à l'état vide à une température de 33°C ;
- la figure 2 est une vue semblable à la figure 1 mais montrant la paillette à l'état rempli ;
- les figures 3 et 4 sont des vues semblables respectivement à la figure 2 et à la figure 1 mais à une température de 38°C ;
- la figure 5 est un graphe illustrant le virage de teinte de la matière thermochromique dans laquelle est fait le tube de la paillette ;
- la figure 6 est une vue schématique d'un fragment de la matière thermochromique du tube de la paillette ; et
- les figures 7 et 8 sont des vues semblables respectivement à la figure 2 et à la figure 3 mais pour une variante de la paillette où le bouchon comporte un composant indicateur ayant une première couleur prédéterminée en l'absence de contact préalable avec la substance à base liquide et une seconde couleur prédéterminée, ayant une teinte différente de la teinte de la première couleur, lorsqu'il a été en contact avec cette substance.

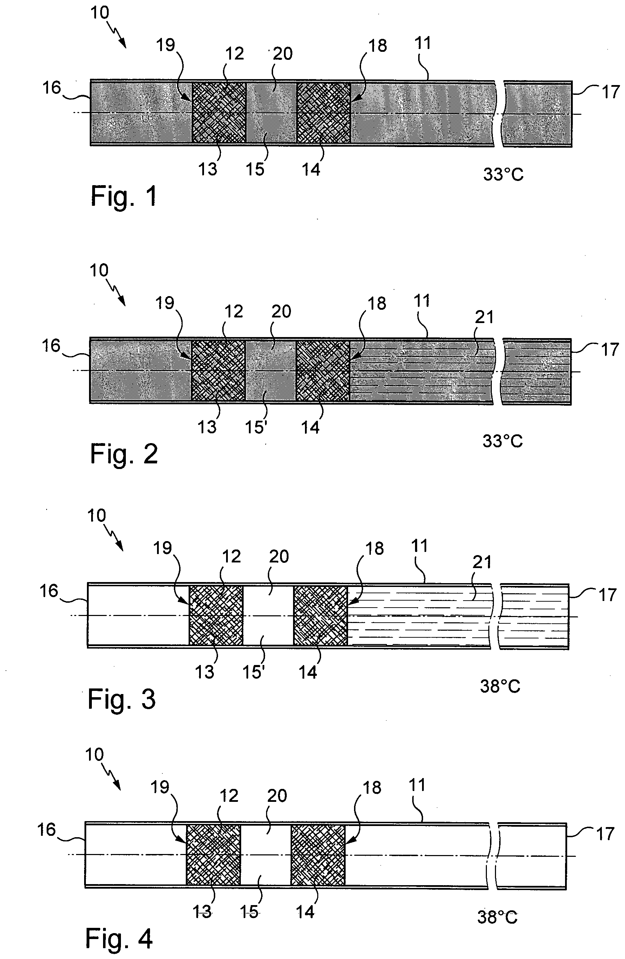

La paillette 10 illustrée sur la figure 1 comporte un tube 11 et un bouchon 12.

Le tube 11 est en matière plastique thermochromique extrudée avec un diamètre interne qui est par exemple de 1,6 ou de 2,5 mm et une longueur de l'ordre de 133 mm.

Le bouchon 12 est du type tripartite, c'est-à-dire formé par deux tampons 13 et 14 d'une substance fibreuse enserrant un agent de scellement 20 formé par une poudre 15 (figure 1) capable de se transformer au contact d'un liquide en une pâte ou gel 15' (figure 2) imperméable adhérant à la paroi du tube 11 pour que le bouchon 12 soit étanche aux liquides.

A l'état initial, illustré sur la figure 1, le bouchon 12 est disposé au voisinage de l'extrémité 16 du tube 11 et il est prévu qu'à l'état rempli, la dose de substance à base liquide qui doit être conservée dans la paillette 10 soit disposée entre le bouchon 12 et l'extrémité 17 du tube 11 la plus éloignée du bouchon 12.

Pour remplir la paillette 10, l'extrémité 16 est mise en communication avec une source de vide tandis que l'extrémité 17 est mise en communication avec un récipient contenant la substance à introduire dans la paillette.

L'air initialement contenu entre le bouchon 12 et l'extrémité 17 est aspiré au travers du bouchon 12 tandis que la substance 21 (figure 2) progresse dans le tube 11 jusqu'à ce qu'elle rencontre le bouchon 12, par l'extrémité 18 de celui-ci tournée vers l'extrémité 17 du tube 11, c'est-à-dire l'extrémité du bouchon 12 que l'on voit à droite sur les figures 1 et 2.

La paillette 10 est alors à l'état rempli montré sur la figure 2.

Le cas échéant, après remplissage, la paillette est soudée au voisinage de l'une ou de ses deux extrémités 16 et 17 et est stockée au froid.

Pour vider la paillette 10, le cas échéant après découpage des portions d'extrémité soudées et décongélation, on fait pénétrer dans le tube 11 une tige qui vient porter contre l'extrémité 19 du bouchon 12 (extrémité située du côté opposé à l'extrémité 18).

Avec cette tige, on fait coulisser le bouchon 12 à la façon d'un piston vers l'extrémité 17 ou l'extrémité correspondante après découpe de la portion soudée, ce qui provoque l'expulsion de la dose de substance 21 qui avait été introduite dans la paillette.

On observera, en comparant les figures 2 et 3 (ou les figures 1 et 4), que l'aspect visuel du tube 11 de paillette 10 est différent à la température de 33°C (figures 1 et 2) et à la température de 38°C (figures 3 et 4).

Ce changement, entre le premier aspect visuel illustré sur les figures 1 et 2 et le deuxième aspect visuel illustré sur les figures 3 et 4, qui est différent du premier aspect visuel, provient de ce que le tube 11 est en matière thermochromique présentant un virage de teinte à un seuil prédéterminé de température.

Ici, la matière thermochromique du tube 11 a une teinte bleue lorsque sa température est en-dessous du seuil de virage de teinte et une teinte incolore ou quasi-incolore lorsque sa température est au-dessus du seuil de virage de teinte.

Sur la figure 4, où les températures sont portées en abscisses et les teintes en ordonnées, la courbe 25 illustre le virage de teinte de la matière thermochromique dans laquelle est fait le tube 11.

Ainsi que le montre la portion 26 de la courbe 25 que l'on voit à gauche du point 27, tant que la température est inférieure à 34°C, le tube 11 garde la même teinte (premier aspect visuel), à savoir une teinte bleue.

Ainsi que le montre la portion 28 de la courbe 25 que l'on voit à droite du point 29, tant que la température est supérieure à 37°C, le tube 11 garde la même teinte (deuxième aspect visuel), à savoir une teinte incolore ou quasi-incolore.

La portion 30 de la courbe 25, située entre le point 27 et le point 29, montre la teinte du tube 11 lorsque sa température croit entre 34°C (point 27) et 37°C (point 29). Ce sens d'augmentation de température est symbolisé par les flèches que comporte la portion 30. On voit que jusqu'à 36°C le tube 11 garde la teinte bleue (premier aspect visuel) et que la teinte du tube 11 change progressivement de bleue (premier aspect visuel) à incolore ou quasi-incolore (deuxième aspect visuel) entre 36°C et 37°C.

La portion 31 de la courbe 25, située entre le point 29 et le point 27, montre la teinte du tube 11 lorsque sa température décroit entre 37°C (point 29) et 34°C (point 27). Ce sens de diminution de température est symbolisé par les flèches que comporte la portion 31. On voit que jusqu'à 34,2°C le tube 11 garde la teinte incolore ou quasi-incolore (deuxième aspect visuel) et que la teinte du tube 11 change progressivement d'incolore ou quasi-incolore (deuxième aspect visuel) à bleue (premier aspect visuel) entre 34,2°C et 34°C.

Le virage de teinte du tube 11 est ainsi réversible, avec une hystérésis (entre les points 27 et 29) de 3°C.

Le seuil prédéterminé de température pour le virage de teinte est de 37°C dans le sens de l'augmentation de température et de 34°C dans le sens de la diminution de température.

Grâce à ce virage de teinte, la matière du tube 11 de la paillette 10 joue le rôle d'un composant indicateur de température.

Le tube 11 permet à l'opérateur, quand la paillette 10 est remplie, de vérifier visuellement si la dose de substance 21 contenue dans la paillette 10 est au-dessus de 37°C dans le sens de l'augmentation de température et en-dessous de 34°C dans le sens de la diminution de température.

Par exemple, si la substance 21 est de la semence pour insémination artificielle qui doit être transférée à l'animal vers 37°C, le tube 11 permet à l'opérateur de savoir que la température de la substance 21 est correcte tant que le tube 11 est incolore ou quasi-incolore.

Vu la faible épaisseur de paroi du tube 11 d'une paillette 10 (ici de l'ordre de 170 µm), la température de la partie du tube 11 qui entoure la substance 21 correspond à celle de la substance.

En pratique, la substance 21 est réchauffée en plongeant la paillette 10 dans un bain-marie.

Le fait que tout le tube 11 est en matière thermochromique permet de vérifier la température sur toute la longueur du tube 11.

Si une partie de la dose de substance 21 que contient le tube 11 sur une partie de sa longueur est en-dessous de 34°C et une autre partie de la dose de substance 21 que contient le tube 21 sur une autre partie de sa longueur est au-dessus de 37°C, par exemple parce que seule une partie du tube 11 a été plongée dans le bain-marie, la différence d'aspect du tube 11 sur les deux parties concernées permettra à l'opérateur de savoir que cette différence existe.

Le caractère réversible du virage de teinte de la matière thermochromique avec laquelle est formé le tube 11 permet un suivi de la température de la substance 21 contenue dans la paillette. Par exemple, si la substance a eu le temps de se refroidir entre l'opération de réchauffement au bain-marie et le moment où l'opérateur s'apprête à effectuer une insémination artificielle, au point d'être en-dessous de 34°C, l'aspect du tube 11 permettra à l'opérateur de savoir que la substance 21 s'est ainsi refroidie.

On notera qu'il est avantageux que, dans la paillette 10, le rôle de composant indicateur de température soit joué par la matière du tube 11 plutôt que par un composant rapporté sur la matière du tube 11 tel qu'un revêtement ou une étiquette.

Cela permet de refléter fidèlement la température de la substance 21 grâce au contact direct avec la matière du tube 11 tout en évitant les risques que pourraient poser un tel contact direct en raison des frottements entre le bouchon 12 et le tube 11 qui se produisent lors de fabrication (insertion du bouchon 12 dans le tube 11) ou lors de l'expulsion de la dose de substance 21 (coulissement du bouchon 12 sur une grande partie de la longueur du tube 11).

Cela permet également de pouvoir fabriquer la paillette 10 de façon beaucoup plus simple et économique que s'il avait fallu ajouter sur la surface interne du tube 11, sur toute sa longueur, un composant indicateur de température séparé.

La fabrication du tube 11 de la paillette 10 s'effectue ici classiquement par extrusion d'une matière plastique si ce n'est que cette matière plastique (ici du PVC) comporte un additif pour la rendre thermochromique avec le virage de teinte susmentionné.

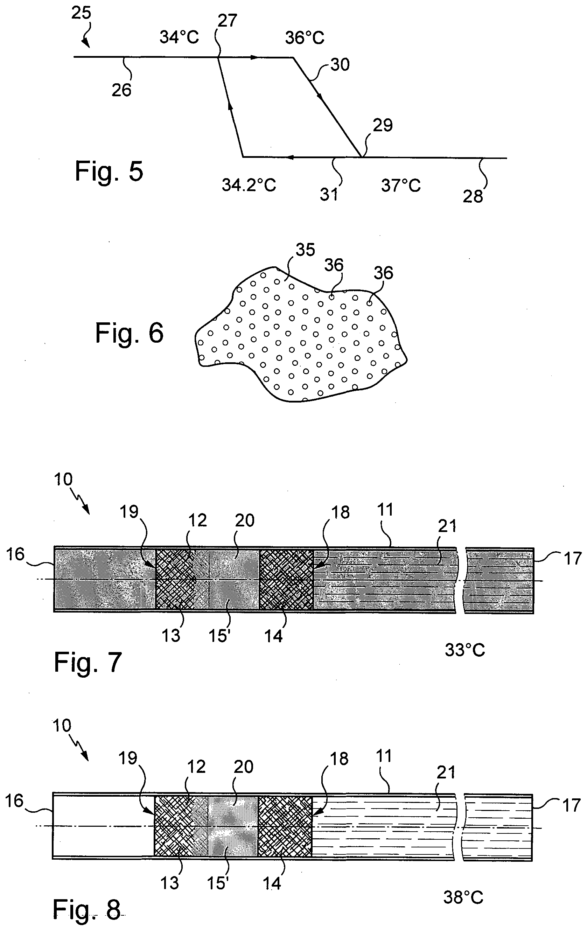

La figure 6 montre un fragment de la matière thermochromique du tube de la paillette. Cette matière a une base 35 en PVC incolore ou quasi-incolore à laquelle a été ajouté un additif pour la rendre thermochromique.

Cet additif est formé par des microcapsules 36 de forme globalement sphérique. Chaque microcapsule 36 présente une écorce renfermant une solution thermochrome.

Ici, les microcapsules 36 ont un diamètre moyen d'environ de 5 à 10 micromètres. La dispersion de diamètres liée à la méthode de fabrication des microcapsules (polycondensation interfaciale) fait que le diamètre de certaines microcapsules va jusqu'à 20 micromètres.

Avec une telle taille, les microcapsules 36 offrent une bonne résistance à la pression et à la température, leur permettant d'être compatible avec les opérations d'extrusion à chaud servant à fabriquer le tube 11.

On notera que l'épaisseur de paroi du tube 11 est l'ordre de 170 micromètres.

L'écorce des microcapsules 36 est en polyurée.

Les études menées par la demanderesse ont montré que cette matière offre l'avantage d'être bien compatible avec la base 35 en PVC et de pouvoir être transparente incolore. Cela permet de bien voir la solution thermochrome présente dans chaque microcapsule 36.

Les meilleurs résultats pour la transparence ont été obtenus avec un polyurée issu de la réaction d'un polyisocyanate aromatique (résultats meilleurs qu'avec un polyisocyanate aliphatique).

Les études menées par la demanderesse ont également montré que cette matière offre l'avantage de ne pas influer sur la viabilité des spermatozoïdes présents dans de la semence diluée conservée dans une paillette dont le tube comporte des microcapsules dont l'écorce est en cette matière.

Les microcapsules 36 sont ici réalisées par la méthode connue de polycondensation interfaciale.

Ici, les composés permettant d'obtenir l'écorce en polyurée des microcapsules 36 sont les suivants :
- le polyisocyanate aromatique à base de TDI (toluène diisocyanate) (proportion 86,5% en masse), de formule brute C₁₉H₃₀N₂O₈, identifié par le numéro CAS 53317-61-6 ;
- la guanidine carbonate (proportion 8,6% en masse), de formule brute C₂H₇N₃O₃, identifiée par le numéro CAS 593-85-1 ; et
- l'hydrazine hydrate (proportion 4.9% en masse), de formule brute H₂N-NH₂-H₂O, identifiée par le numéro CAS 10217-52-4.

Ici, la solution thermochrome que renferme chaque microcapsule 36 est composée :
- d'un solvant, ici du méthyl stéarate (proportion 92,8 % en masse), de formule brute C₁₉H₃₈O₂, identifié par le numéro CAS 112-61-8 ;
- d'un donneur de proton (encore appelé révélateur ou agent actif), ici du bisphenol A (proportion 4,8% en masse), de formule brute C₁₅H₁₆O₂, identifié par le numéro CAS 80-05-7 ; et
- d'un leuco-colorant, ici du CVL (Crystal Violet Lactone) (proportion 2,4 % en masse), de formule brute C₂₆H₂₉N₃O₂, identifié par le numéro CAS 1552-42-7.

Grâce à ces trois composés, ainsi dosés en masse, la solution thermochrome de vire d'une teinte bleue à incolore ou quasi-incolore pour les seuils de températures susmentionés.

Les études menées par la demanderesse ont également montré que ces composés offrent l'avantage de ne pas influer sur la viabilité des spermatozoïdes présents dans de la semence diluée conservée dans une paillette dont le tube comporte des microcapsules contenant cette solution.

L'utilisation du méthyl stéarate comme solvant offre l'avantage d'une certaine précision des virages de teintes et une hystérésis relativement faible.

On notera que lors de la fabrication du tube 11, par extrusion à chaud, une partie des microcapsules présentes dans la matière initiale a son écorce qui est brisée. En conséquence, on retrouve en-dehors des microcapsules 36 des composants de l'écorce et des composants de la solution thermochrome.

Pour obtenir une bonne résistance à la pression et à la chaleur des microcapsules (pour qu'au moins une majeure partie des microcapsules de l'additif subsiste après l'opération d'extrusion donnant le tube 11, où la pression atteint 500 bars et la température 180°C pendant 1 à 2 mn), en outre de la taille des microparticules susmentionnée, les études menées par la demanderesse ont montré que de bons résultats sont obtenus pour cette résistance mécanique et pour cette résistance thermique tout en gardant le caractère incolore ou quasi-incolore de l'écorce avec pour les microcapsules une proportion de 25 % en masse d'écorce. On obtient en effet ainsi une bonne taille pour l'épaisseur de l'écorce.

Les études menées par la demanderesse ont montré que de bons résultats sont obtenus pour une proportion comprise entre 20% et 30%, voire 40%.

On notera qu'il est possible d'effectuer une analyse de la composition des microcapsules 36 en dissolvant au préalable la base 35 en PVC de la matière du tube 11, par exemple avec du THF. L'analyse est faite par exemple par chromatographie en phase gazeuse après vaporisation.

Ici, l'additif formé par les microcapsules 36 est dans la proportion de 2,5% en masse dans la matière du tube 11.

Les études menées par la demanderesse ont montré que de bons résultats sont obtenus pour une proportion comprise entre 1,5% et 3,5%, voire 10%.

Pour obtenir un état de surface lisse du tube 11 de la paillette 10 au moins du côté interne, la matière initiale donnant par extrusion à chaud le tube 11 contient une proportion de lubrifiant de type melt par exemple de 1,5% en masse, ce lubrifiant fondant sous l'effet de la chaleur, venant en surface et se mettant donc entre la matière en cours d'extrusion et la filière d'extrusion.

L'état de surface lisse du côté interne du tube 11 permet d'offrir une bonne conservation de la substance 21, en particulier une excellente viabilité des spermatozoïdes lorsque la substance 21 est de la semence animale diluée, ainsi que l'étanchéité entre le tube 11 et le bouchon 12 lors de son coulissement pour expulser la dose de substance 21.

On va maintenant décrire à l'appui des figures 7 et 8 une variante de la paillette montrée sur les figures 1 à 4.

Dans cette variante de la paillette 10, l'agent de scellement 20 est remplacé par un agent de scellement différent. Pour le reste, la paillette 10 illustrée sur les figures 7 et 8 est identique à la paillette 10 illustrée sur les figures 1 à 4.

Lorsqu'elle est vide (sans la substance 21), la paillette 10 illustrée sur les figures 7 et 8 a un aspect semblable à la paillette 10 illustrée sur les figures 1 et 4.

On observera, en comparant les figures 1 et 4 avec les figures 7 et 8, que le bouchon 12 a un aspect différent lorsque la paillette 10 est à l'état vide (figures 1 et 4) et à l'état rempli (figures 7 et 8).

Lorsque la paillette 10 est à l'état vide, l'agent de scellement 20 (poudre 15) du bouchon 12 a une première couleur et lorsque la paillette 10 est à l'état rempli, l'agent de scellement 20 (gel 15') a une seconde couleur.

Ici, la teinte de la première couleur (état vide) est blanche légèrement marron tandis que la teinte de la seconde couleur (état rempli) est jaune légèrement verte.

Par exemple, la poudre 15, telle que vue au travers du tube 11 dans l'état incolore ou quasi-incolore (figure 4), a une couleur Pantone® 155U et le gel 15', tel que vu au travers du tube 11 dans l'état incolore ou quasi-incolore (figure 8), a une couleur Pantone® 395C.

On rappelle ici que la teinte d'une couleur correspond aux longueurs d'ondes (ou à la longueur d'onde unique si la couleur fait partie de l'arc-en-ciel) de la lumière émise par l'objet ayant cette couleur. La teinte n'est qu'une des composantes de la couleur, qui dépend d'autres paramètres tels que la luminosité et la saturation.

Le changement de teinte entre la poudre 15 et le gel 15' est dû à la présence, dans l'agent de scellement 20, d'un produit changeant de teinte entre l'état sec et l'état dissout dans l'eau.

Ici, le produit changeant de teinte est le sel sodique de fluorescéine.

On notera que le sel sodique de fluorescéine n'est pas spermicide et convient donc pour le contact avec de la semence animale.

On sait que le sel sodique de fluorescéine a la formule suivante : 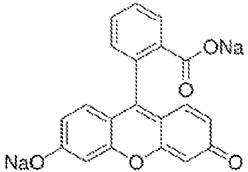 et qu'il est identifié par le numéro CAS 518-47-8.

On sait également que le sel sodique de fluorescéine est un sel fluorofore, c'est-à-dire capable d'émettre de la lumière de fluorescence, lorsqu'il est dissout dans l'eau ; tandis qu'à l'état sec il s'agit d'un sel non fluorofore.

Lorsque l'agent de scellement 20 du bouchon 12 est à l'état sec (poudre 15), le sel sodique de fluorescéine n'émet pas de lumière de fluorescence puisqu'il est à l'état sec. Lorsque l'agent de scellement 20 du bouchon 12 est à l'état humecté (gel 15'), le sel sodique de fluorescéine est dissout dans l'eau contenue dans le gel 15' et émet alors de la lumière de fluorescence.

Le changement de teinte de l'agent de scellement 20 est dû à l'ajout de la lumière de fluorescence.

Grâce à la présence du sel sodique de fluorescéine, l'agent de scellement 20 forme un composant indicateur de contact entre le bouchon 12 et la substance 21 : l'agent de scellement 20 a une première couleur prédéterminée en l'absence de contact préalable avec la substance 21 et une seconde couleur prédéterminée, ayant une teinte différente de la teinte de la première couleur, lorsque l'agent de scellement 20 a été en contact avec la substance 21.

On observera, comme illustré sur les figures 7 et 8, qu'à l'état humecté du bouchon 12, une partie du tampon 13 a pris la même teinte que le gel 15'.

En effet, lors du remplissage de la paillette, entre le moment où la substance 21 a atteint la poudre 15 et le moment où la poudre 15 s'est transformée en un gel 15' étanche aux liquides, une petite quantité de poudre 15 dissoute par la substance 21 mais non encore gélifiée a été absorbée par le tampon 13.

Le composant indicateur de contact avec la substance 21 que forme l'agent de scellement 20 est utile pour contrôler le bon remplissage de la paillette 10, et plus précisément la bonne humectation du bouchon 12 par la substance 21.

On sait qu'il est très important, pour la bonne conservation de la dose de substance 21 contenue dans la paillette 10, que le bouchon 12 soit correctement humecté. En effet, dans le cas où la paillette 10 n'est pas soudée à ses extrémités, ou soudée à la seule extrémité 17 la plus éloignée du bouchon 12, l'herméticité de la paillette 10 est assurée en partie par le bouchon 12.

Lors du vidage de la paillette 10, l'humectation correcte du bouchon 12 lors du remplissage permet au bouchon 12 de jouer son rôle de piston sans qu'il y ait des fuites entre le tube 11 et le bouchon 12.

Grâce au caractère transparent ou translucide du tube 11, le contrôle du bon remplissage de la paillette peut s'opérer visuellement par l'opérateur, par simple vérification que l'agent de scellement 20 du bouchon 12 a bien pris la teinte de la seconde couleur prédéterminée, c'est-à-dire une teinte jaune légèrement verte dans le présent exemple.

Le contrôle du bon remplissage de la paillette 10 peut également s'effectuer de façon automatique.

En pratique, le remplissage s'effectuant à température ambiante inférieure à 34°C, on tient compte de la teinte bleue (premier aspect) du tube 11 pour le contrôle du bon remplissage.

Dans l'exemple illustré du bouchon 12, la poudre 15 comporte 1/1000 en poids de poudre de sel sodique de fluorescéine à l'état sec.

Une plage convenant à la mise en oeuvre de l'invention est de 1/100 à 1/100000 en poids de poudre de sel sodique de fluorescéine à l'état sec.

Avantageusement, la plage est de 1/500 à 1/50000, et encore plus avantageusement de 1/1000 à 1/25000.

Pour avoir une bonne homogénéité, la poudre 15 est préparée par mélanges successifs.

Dans l'exemple illustré du bouchon 12, la poudre 15 est formée exclusivement par de la poudre de sel sodique de fluorescéine à l'état sec et par de la poudre de matière polymérisant au contact de l'eau.

Ici, la poudre de matière polymérisant au contact de l'eau est de l'alginate.

Dans une variante de l'agent de scellement 20, la poudre de sel sodique de fluorescéine à l'état sec est remplacée par un autre produit non fluorophore à l'état sec et fluorophore quand il est dissout dans l'eau, qui est sous la forme d'un sel à l'état sec.

Il s'agit par exemple d'un autre sel de fluorescéine, d'un sel de Rhodamine B, d'un sel de Rhodamine 6G et/ou d'un sel d'Eriochrome® Cyanine R.

On sait que la Rhodamine B a la formule suivante : 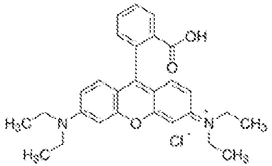 et qu'elle est identifiée par le numéro CAS 81-88-9

On sait que la Rhodamine 6G a la formule suivante : 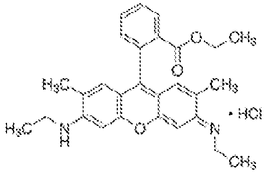 et qu'elle est identifiée par le numéro CAS 989-38-8

On sait que l'Eriochrome® Cyanine R a la formule suivante : 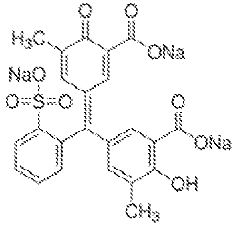 et qu'elle est identifiée par le numéro CAS 64-18-9

L'agent fluorophore que comporte l'agent de scellement 20 à l'état humecté (gel 15') peut être formé par un mélange de fluorescéine, de Rhodamine 6G et de Rhodamine B ou par un seul ou par deux de ces produits.

En choisissant un ou plusieurs de ces produits, on peut ajuster la teinte de l'agent de scellement 20 à l'état humecté (gel 15'). La sélection de la teinte de l'agent de scellement 20 lorsqu'il a été en contact avec la substance, permet de reconnaître la paillette 10, visuellement ou par analyse du spectre de la lumière émise.

Dans des variantes non illustrées, l'agent de scellement 20 comporte, en outre du ou des agents fluorophores, un agent colorant.

On sait qu'un agent colorant, contrairement à un agent fluorophore, n'émet pas de lumière comportant un pic ayant une crête de longueur d'onde prédéterminée, mais une plage de longueurs d'ondes de même intensité relativement étendue.

La combinaison du spectre d'un agent fluorophore et d'un agent colorant peut être utile pour la qualité de la reconnaissance de l'origine de la paillette.

L'agent colorant, sans être flurophore, est par exemple du bleu de méthylène ou de l'a-zurine.

De tels produits colorants, lorsqu'ils sont à l'état sec, par exemple sous la forme d'une faible proportion de l'agent de scellement 20 à l'état sec (poudre 15) n'influent pas ou n'influent que très peu sur la couleur des autres produits formant l'agent de scellement, par exemple la poudre d'alginate. En revanche, lorsque l'agent de scellement est humecté, le produit colorant communique sa coloration au reste de l'agent de scellement, par exemple le gel 15'.

En variante, le changement de couleur de l'agent de scellement 20 s'effectue au contact d'un liquide autre que l'eau, par exemple un produit contenu dans un dilueur ou un conservateur de semence pour semence animale.

Pour plus de détails sur l'agent de scellement 20 de la variante de la paillette 10 illustrée sur les figures 7 et 8, on pourra se reporter aux demandes de brevets français 3 011 731 et 3 011 732.

Dans une variante non illustrée, la base 35 de la matière du tube 11 n'est pas transparente incolore mais transparente colorée, par exemple en rose (le premier aspect est une teinte violette et le deuxième aspect est une teinte rose) ou jaune (le premier aspect est une teinte verte et le deuxième aspect est une teinte jaune).

Dans une autre variante non illustrée, le seuil de virage de teinte est ciblé sur une valeur différente de 37°C, par exemple 4°C qui correspond à la température recommandée lors de l'étape d'équilibration de la paillette, après remplissage et avant congélation en azote liquide, ou alors -120°c qui est la température maximum pour garantir une congélation efficace ; et/ou la matière thermochromique est conçue pour avoir plusieurs virages de teinte, par exemple ciblés respectivement sur -120°C, sur 4°C et sur 37°C.

En variante, la valeur cible de 37°C est remplacée par une valeur cible de 35°C. Les seuils de changement d'aspect visuel sont alors de 35°C dans le sens de l'augmentation de température et de 32°C dans le sens de la diminution de température.

Dans des variantes non illustrées, la base de la matière du tube tel que 11 est différente du PVC, par exemple du Surlyn® ; la composition de l'écorce des microcapsules est différentes, par exemple un polyurée issu de la réaction d'autres composants ou un polyuréthane par exemple issu de la réaction d'un polyisocyanate aromatique ; et/ou la composition de la solution thermochrome est différente, par exemple avec un leuco-colorant différent du CVL pour avoir une teinte autre que bleue à l'état autre qu'incolore ou quasi-incolore.

De nombreuses autres variantes sont possibles en fonction de circonstances, et l'on rappelle à cet égard que l'invention ne se limite pas aux exemples décrits et représentés.

## Revendications

1. Paillette pour la conservation d'une dose prédéterminée de substance à base liquide, comportant un tube (11) s'étendant entre une première extrémité (16) et une seconde extrémité (17) et comportant un bouchon (12) perméable aux gaz et étanche aux liquides, lequel bouchon (12) est disposé dans le tube (11) au voisinage de sa première extrémité (16) et s'étend entre une première extrémité (19) tournée vers la première extrémité (16) du tube (11) et une seconde extrémité (18) tournée vers la seconde extrémité (17) du tube (11), avec ledit bouchon (12) et ledit tube (11) qui sont configurés pour qu'après que la substance (21) à base liquide est venue à la rencontre du bouchon (12) par sa seconde extrémité (18), le bouchon (12) bloque le passage de la substance (21) à base liquide et est, par poussage sur sa première extrémité (19), coulissable dans le tube (11) vers la seconde extrémité (17) du tube (11), **caractérisée en ce que** ledit tube (11) est en matière thermochromique présentant un virage de teinte réversible à un seuil prédéterminé de température, grâce à quoi le tube (11) présente un premier aspect visuel si sa température est en-dessous dudit seuil prédéterminé et un deuxième aspect visuel différent du premier aspect visuel si sa température est au-dessus dudit seuil prédéterminé.

2. Paillette selon la revendication 1, **caractérisée en ce que** le tube (11) est transparent ou translucide lorsqu'il présente le premier aspect et lorsqu'il présente le deuxième aspect, le bouchon étant visible au travers du tube.

3. Paillette selon l'une quelconque des revendications 1 ou 2, **caractérisée en ce que** le tube présente une surface interne ayant un état de surface lisse.

4. Paillette selon l'une quelconque des revendications 1 à 3, **caractérisée en ce que** ledit seuil prédéterminé est de 35°C à 37°C dans le sens de l'augmentation de température.

5. Paillette selon l'une quelconque des revendications 1 à 4, **caractérisée en ce que** ledit seuil prédéterminé est de 32°C à 34°C dans le sens de la diminution de température.

6. Paillette selon l'une quelconque des revendications 1 à 5, **caractérisée en ce que** le tube (11) a une teinte bleue dans le premier aspect et est incolore dans le deuxième aspect.

7. Paillette selon l'une quelconque des revendications 1 à 6, **caractérisée en ce que** la matière du tube (11) comporte des microcapsules (36) ayant une écorce renfermant une solution thermochrome.

8. Paillette selon la revendication 7, **caractérisée en ce que** ladite écorce des microcapsules (36) est en polyurée ou en polyuréthane.

9. Paillette selon la revendication 8, **caractérisée en ce que** ladite écorce des microcapsules (36) est issue de la réaction d'un polyisocyanate aromatique.

10. Paillette selon l'une quelconque des revendications 7 à 9, **caractérisée en ce que** ladite solution thermochrome comporte comme solvant du méthyl stéarate.

11. Paillette selon l'une quelconque des revendications 7 à 10, **caractérisée en ce que** dans lesdites microcapsules (36) la proportion en masse de l'écorce est comprise entre 20% et 40%, de préférence 25%.

12. Paillette selon l'une quelconque des revendications 7 à 11, **caractérisée en ce que** la proportion en masse des microcapsules (36) dans la matière du tube (11) est comprise entre 1,5% et 10%, de préférence 2,5 %.

13. Paillette selon l'une quelconque des revendications 7 à 12, **caractérisée en ce que** la matière du tube (11) comporte une base (35) en PVC.

14. Paillette selon l'une quelconque des revendications 1 à 13, **caractérisée en ce que** ledit bouchon (12) est formé par deux tampons (13, 14) en substance fibreuse enserrant un agent de scellement (20) formé par une poudre (15) se transformant au contact de ladite substance (21) en une pâte ou gel (15') imperméable adhérant à la paroi du tube (11) pour que le bouchon (12) soit étanche aux liquides, ladite poudre (15) comportant de la poudre d'un sel non fluorophore à l'état sec et fluorophore quand il est dissout dans l'eau.

## Patentansprüche

1. Röhrchen zur Aufbewahrung einer vorgegebenen Menge einer Substanz auf flüssiger Basis, aufweisend ein Rohr (11), welches sich zwischen einem ersten Ende (16) und einem zweiten Ende (17) erstreckt und einen gegenüber Gasen durchlässigen und gegenüber Flüssigkeiten dichten Verschluss (12) aufweist, wobei der Verschluss (12) in dem Rohr (11) in der Nähe von dessen erstem Ende (16) angeordnet ist und sich zwischen einem dem ersten Ende (16) des Rohrs (11) zugewandten ersten Ende (19) und einem dem zweiten Ende (17) des Rohrs (11) zugewandten zweiten Ende (18) erstreckt, wobei der Verschluss (12) und das Rohr (11) derart konfiguriert sind, dass nach Auftreffen der Substanz (21) auf flüssiger Basis auf den Verschluss (12) über dessen zweites Ende (18) der Verschluss (12) den Durchlass der Substanz (21) auf flüssiger Basis blockiert und er mittels Drücken bzw. Pressen auf sein erstes Ende (19) verschiebbar ist in dem Rohr (11) in Richtung des zweiten Endes (17) des Rohrs (11),
**dadurch gekennzeichnet,**
**dass** das Rohr (11) aus einem thermochromen Material besteht, welches eine bei einem vorgegebenen Temperaturschwellenwert reversible Farbtönung aufweist und aufgrund dessen das Rohr (11) ein erstes visuelles Erscheinungsbild, wenn dessen Temperatur unterhalb des vorgegebenen Schwellenwerts liegt, und ein vom ersten Erscheinungsbild verschiedenes zweites visuelles Erscheinungsbild, wenn dessen Temperatur oberhalb des vorgegebenen Schwellenwerts liegt, aufweist.

2. Röhrchen nach Anspruch 1,
**dadurch gekennzeichnet, dass** das Rohr (11) transparent oder transluzent ist, wenn es das erste Erscheinungsbild aufweist und wenn es das zweite Erscheinungsbild aufweist, wobei der Verschluss durch das Rohr hindurch sichtbar ist.

3. Röhrchen nach Anspruch 1 oder 2,
**dadurch gekennzeichnet, dass** das Rohr eine innere Oberfläche aufweist, welche einen Zustand glatter Oberfläche besitzt.

4. Röhrchen nach einem der Ansprüche 1 bis 3,
**dadurch gekennzeichnet, dass** der vorgegebene Schwellenwert bei 35 °C bis 37 °C in Richtung der Temperaturerhöhung liegt.

5. Röhrchen nach einem der Ansprüche 1 bis 4,
**dadurch gekennzeichnet, dass** der vorgegebene Schwellenwert bei 32 °C bis 34 °C in Richtung der Temperaturabnahme liegt.

6. Röhrchen nach einem der Ansprüche 1 bis 5,
**dadurch gekennzeichnet, dass** das Rohr (11) eine blaue Färbung beim ersten Erscheinungsbild aufweist und farblos beim zweiten Erscheinungsbild ist.

7. Röhrchen nach einem der Ansprüche 1 bis 6,
**dadurch gekennzeichnet, dass** das Material des Rohrs (11) Mikrokapseln (36) aufweist, welche eine Schale besitzen, welche eine thermochrome Lösung aufnimmt.

8. Röhrchen nach Anspruch 7,
**dadurch gekennzeichnet, dass** die Schale der Mikrokapseln (36) aus Polyharnstoff oder aus Polyurethan besteht.

9. Röhrchen nach Anspruch 8,
**dadurch gekennzeichnet, dass** die Schale der Mikrokapseln (36) aus der Reaktion eines aromatischen Polyisocyanats hervorgegangen ist.

10. Röhrchen nach einem der Ansprüche 7 bis 9,
**dadurch gekennzeichnet, dass** die thermochrome Lösung als Lösemittel Methylstearat aufweist.

11. Röhrchen nach einem der Ansprüche 7 bis 10,
**dadurch gekennzeichnet, dass** bei den Mikrokapseln (36) der massebezogene Anteil der Schale 20 % bis 40 %, vorzugsweise 25 %, ausmacht.

12. Röhrchen nach einem der Ansprüche 7 bis 11,
**dadurch gekennzeichnet, dass** der massebezogene Anteil der Mikrokapseln (36) in dem Material des Rohrs (11) 1,5 % bis 10 %, vorzugsweise 2,5 %, ausmacht.

13. Röhrchen nach einem der Ansprüche 7 bis 12,
**dadurch gekennzeichnet, dass** das Material des Rohrs (11) eine Basis (35) aus PVC aufweist.

14. Röhrchen nach einem der Ansprüche 1 bis 13,
**dadurch gekennzeichnet, dass** der Verschluss (12) aus zwei Tampons (13, 14) aus einer faserhaltigen Substanz gebildet ist, welche ein Abdichtmittel (20) einbetten bzw. einschließen, welches durch ein Pulver (15) gebildet wird, welches sich bei Kontakt mit der Substanz (21) zu einer undurchlässigen, an der Wandung des Rohrs (11) anhaftenden Paste oder Gel (15') umwandelt, damit der Verschluss (12) gegenüber Flüssigkeiten dicht ist, wobei das Pulver (15) das Pulver eines Salzes aufweist, welches im trockenen Zustand nichtfluorophor ist und fluorophor ist, wenn es in Wasser gelöst wird.

## Claims

1. A straw for the preservation of a predetermined dose of liquid-based substance, comprising a tube (11) extending between a first end (16) and a second end (17) and comprising a liquid-tight, gas-permeable stopper (12), which stopper (12) being disposed in the tube (11) close to its first end (16) and extending between a first end (19) turned towards the first end (16) of the tube (11) and a second end (18) turned towards the second end (17) of the tube (11), said stopper (12) and said tube (11) being configured so that after the liquid-based substance (21) has come to meet the stopper (12) by its second end (18), the stopper (12) blocks the passage of the liquid-based substance (21) and, by pushing on its first end (19), can be slid in the tube (11) towards the second end (17) of the tube (11), **characterized in that** said tube (11) is of thermochromic material having a reversible change in hue at a predetermined temperature threshold, whereby the tube (11) has a first visual appearance if its temperature is below said predetermined threshold and a second visual appearance different from the first visual appearance if its temperature is above said predetermined threshold.

2. A straw according to claim 1, **characterized in that** the tube (11) is transparent or translucent when it has the first appearance and when it has the second appearance, the stopper being visible through the tube.

3. A straw according to any one of claims 1 or 2, **characterized in that** the tube has an inside surface having a smooth surface state.

4. A straw according to any one of claims 1 to 3, **characterized in that** said predetermined threshold is 35°C to 37°C in the direction of temperature increase.

5. A straw according to any one of claims 1 to 4, **characterized in that** said predetermined threshold is 32°C to 34°C in the direction of temperature reduction.

6. A straw according to any one of claims 1 to 5, **characterized in that** the tube (11) has a blue hue in the first appearance and is colorless in the second appearance.

7. A straw according to any one of claims 1 to 6, **characterized in that** the material of the tube (11) comprises microcapsules (36) having a shell enclosing a thermochromic solution.

8. A straw according to claim 7, **characterized in that** said shell of the microcapsules (36) is of polyurea or polyurethane.

9. A straw according to claim 8, **characterized in that** said shell of the microcapsules (36) results from the reaction of an aromatic polyisocyanate.

10. A straw according to any one of claims 7 to 9, **characterized in that** said thermochromic solution comprises methyl stearate as solvent.

11. A straw according to any one of claims 7 to 10, **characterized in that** in said microcapsules (36) the proportion by weight of the shell is comprised between 20% and 40%, preferably 25%.

12. A straw according to any one of claims 7 to 11, **characterized in that** the proportion by weight of said microcapsules (36) in the material of the tube (11) is comprised between 1.5% and 10%, preferably 2.5 %.

13. A straw according to any one of claims 7 to 12, **characterized in that** the material (11) of the tube comprises a PVC base (35).

14. A straw according to any one of claims 1 to 13, **characterized in that** said stopper (12) is formed by two plugs (13, 14) made from a fibrous substance enclosing a sealing agent (20) formed by a powder (15) transforming on contact with said substance (21) into an impermeable paste or gel (15') adhering to the wall of the tube (11) so that the stopper (12) is liquid-tight, said powder (15) comprising the powder of a salt that is not a fluorophore in the dry state and is a fluorophore when it is dissolved in water.
